(19) Europäisches Patentamt
European Patent Office
Office européen des brevets

(11) **EP 2 678 603 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(51) Int Cl.:
***F21V 5/04*** *(2006.01)* ***G02B 17/08*** *(2006.01)*

(21) Anmeldenummer: **12710126.9**

(22) Anmeldetag: **20.02.2012**

(86) Internationale Anmeldenummer:
**PCT/EP2012/000738**

(87) Internationale Veröffentlichungsnummer:
**WO 2012/113532 (30.08.2012 Gazette 2012/35)**

(54) **BELEUCHTUNGSVORRICHTUNG**

LIGHTING DEVICE

DISPOSITIF D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2011 DE 102011012130**

(43) Veröffentlichungstag der Anmeldung:
**01.01.2014 Patentblatt 2014/01**

(73) Patentinhaber: **Bartenbach Holding GmbH 6071 Aldrans (AT)**

(72) Erfinder: **BARTENBACH, Christian A-6071 Aldrans (AT)**

(74) Vertreter: **Thoma, Michael Lorenz Seidler Gossel Rechtsanwälte Patentanwälte Partnerschaft mbB Widenmayerstraße 23 80538 München (DE)**

(56) Entgegenhaltungen:
EP-A1- 2 180 233        WO-A1-2009/036001
DE-A1- 19 728 354       DE-A1-102008 036 845
DE-A1-102009 017 495    DE-U1-202004 011 015
DE-U1-202010 006 675    US-A1- 2004 246 606
US-A1- 2007 152 230     US-A1- 2010 109 500
US-A1- 2010 226 127     US-B1- 6 819 506

EP 2 678 603 B1

**Beschreibung**

Die vorliegende Erfindung betrifft eine Beleuchtungsvorrichtung, insbesondere in Form einer Decken-, Wand- oder Bodenleuchte oder Außenleuchte zur Park-, Gehweg- oder Straßenbeleuchtung, mit einer punktförmigen Lichtquelle vorzugsweise in Form einer LED und einer der Lichtquelle zugeordneten Linse, die eine napf- oder sacklochartige Lichteintrittsausnehmung besitzt, die zumindest einen Teil des eintretenden Lichts mittelbar oder unmittelbar auf eine totalreflektierende und/oder verspiegelte Mantelfläche lenkt, die wiederum das Licht auf eine Lichtaustrittsfläche lenkt, die eine der Lichteintrittsausnehmung gegenüberliegende Stirnseite der Linse bildet.

Eine Beleuchtungsvorrichtung nach dem Oberbegriff des Anspruchs 1 zeigt die Schrift US 2010/0226127, die dabei vorschlägt, die Lichtaustrittsfläche der Linse durch mechanisches oder chemisches Ätzen mit einer Oberflächenstruktur zu versehen. Die Schrift EP 21 80 233 schlägt eine Leuchte vor, bei der Lichtverteilung einer LED mittels eines Reflektors gesteuert wird, der mit einer Glasplatte verschlossen ist. Ferner beschreibt die Schrift DE 10 2008 036 845 eine Linse, deren Lichteintritts- und -austrittsflächen mit einer Oberflächenstruktur in Form von längsstreifenförmigen Abflachungen versehen sein sollen.

Deckenstrahler oder sog. Downlights sind relativ kleinformatige Strahler, die regelmäßig in Gebäudedecken bzw. Decken- oder Möbelpaneele eingebaut bzw. daran an- oder aufgebaut sind, ggf. aber auch hängend bzw. pendelnd montiert sein können und einen begrenzten Raumbereich möglichst gleichmäßig ausleuchten sollen. Mit solchen Downlights können beispielsweise Tische von oben her gezielt und gleichmäßig ausgeleuchtet werden, ohne das Raumambiente zu stören.

In jüngerer Zeit wurde versucht, für derartige Strahler als Lichtquellen LEDs zu verwenden, um die an sich bekannten Vorteile von LEDs wie niedriger Energieverbrauch und lange Lebenszeit auch in diesem Anwendungsbereich bzw. Segment von Leuchten zu nutzen. Dies ist jedoch nicht ohne weiteres möglich, da relativ viel Wärme produzieren und insofern Kühlungseinrichtungen bedürfen, die die Bauhöhe derartiger Strahler auf der Ober- bzw. Rückseite stark vergrößert, so dass ein Deckeneinbau kaum noch möglich ist. Ohne derartige Kühlbausteine auf der Rückseite der LED ist jedoch ein sicherer Betrieb kaum möglich.

Zum anderen ist die hierbei erzielbare Lichtqualität bislang oft unbefriedigend. Insbesondere treten auf der beleuchteten Fläche Unregelmäßigkeiten wie Helligkeitsflecken oder Farbflecken auf. Die hiergegen an sich ergreifbaren Maßnahmen sind jedoch dadurch eingeengt, dass die entsprechenden Strahler auch bei Verwendung von LEDs als Lichtquellen von der Optik sowohl im ausgeschalteten wie auch im eingeschalteten Zustand möglichst den herkömmlichen Downlights entsprechen sollen, um im Verkauf Akzeptanz zu erzielen und den raumgestalterischen Ansprüche zu genügen.

Beispielsweise zeigt die DE 20 2007 007 046 U1 einen Decken-Einbaustrahler, für den als Lichtquelle eine LED vorgesehen sein soll, hinter der in der Decke versenkt ein Reflektor angeordnet ist, um das Licht gezielt abzustrahlen. Zusätzlich sind über die Einbaufläche überstehende Lichtleitringe vorgesehen, die das von der LED abgestrahlte Licht nicht nur nach unten, sondern auch seitlich an der Decke entlang ableiten sollen. Ebenfalls einen Einbaustrahler mit einer LED als Lichtquelle zeigt die DE 20 2009 005 777 U1, wobei hier die LED im Brennpunkt eines Reflektors angeordnet sein soll. Ein auf der Reflektorrückseite sitzender Kühlkörper ist in Form einer dünnen Platte in das Strahlergehäuse integriert, wodurch eine ausreichende Kühlleistung nur bei kleineren Leistungen möglich ist. Ferner zeigt die KR 100946548 B1 ein LED Downlight, in dessen Reflektor die LED von hinten her eingesetzt ist.

Die EP 20 31 296 A1 zeigt eine in ein Deckenpaneel integrierte Beleuchtungsvorrichtung mit einer LED als Lichtquelle, der eine Linse vorgeschaltet ist, um das von der LED abgegebene Licht vollständig einzufangen und auf einen Brennpunkt zu fokussieren. Hierdurch kann die im Deckenpaneel vorzusehende Lichtaustrittsöffnung sehr klein ausgebildet werden, da das Licht hindurchfokussiert wird. Allerdings entspricht diese Ausbildung der Beleuchtungsvorrichtung vom optischen Erscheinungsbild her nicht mehr einem klassischen Downlight. Zudem ist keine herkömmliche Montage wie bei herkömmlichen Downlights möglich.

Der vorliegenden Erfindung liegt die Aufgabe zugrunde, eine verbesserte Beleuchtungsvorrichtung der eingangs genannten Art zu schaffen, die Nachteile des Standes der Technik vermeidet und Letzteren in vorteilhafter Weise weiterbildet. Insbesondere soll ein kleinbauender Strahler in Form eines Downlights geschaffen werden, der trotz Verwendung einer LED als Lichtquelle eine gleichmäßige Ausleuchtung der zu bestrahlenden Fläche ohne Unregelmäßigkeiten und Hitzeproblemen ermöglicht und dabei gegenüber Festigungstoleranzen und Positionstoleranzen bezüglich der Anordnung der Lichtquelle relativ zur Linse unempfindlich ist.

Erfindungsgemäß wird diese Aufgabe durch eine Beleuchtungsvorrichtung nach Anspruch 1 gelöst. Bevorzugte Ausgestaltungen der Erfindung sind Gegenstand der abhängigen Ansprüche.

Es wird also vorgeschlagen, das von der punktförmigen Lichtquelle abgegebene Licht bzw. deren Lichtstrahlen schon im Bereich der Linse und/oder auch im Lichtaustrittsbereich zu durchmischen, so dass Unregelmäßigkeiten in der bestrahlten Fläche vermieden werden. Erfindungsgemäß ist die Mantelfläche der Linse, die das von der Lichteintrittsfläche her kommende Licht durch Totalreflexion und/oder Verspiegelung auf die Lichtaustrittsfläche lenkt, mit einer Vielzahl von Facetten versehen. Eine Oberflächenstrukturierung der totalreflektierenden und/oder verspiegelten Mantelfläche in Form einer Facettierung sorgt dafür, dass die umgelenkten Lichtstrahlen einander, d.h. umgelenkte Lichtstrahlen wiederum umgelenkte Lichtstrahlen überkreuzen und sich das Licht durchmischt, so dass Unregelmäßigkeiten auf der bestrahlten Fläche wie Lichtflecken und Farbflecken vermieden werden können. Die Facetten sind dabei derart geformt, dass die von der Mantelfläche bzw. den dort vorgesehenen Facetten umgelenkten Lichtstrahlen einander noch vor Erreichen der Lichtaustrittsfläche der Linse überkreuzen, so dass es zu einer Durchmischung noch im Bereich der Linse kommt. Die Überlagerung bzw. Überkreuzung der Lichtstrahlen noch innerhalb der Linse bezieht sich dabei auf die Strahlen von einer theoretisch idealen, tatsächlich punktförmigen Lichtquelle, bei der alle Lichtstrahlen von tatsächlich einem mathematischen Punkt ausgehen und meint nicht lediglich die Überkreuzungen, die bei einer Lichtquelle endlicher Ausdehnung durch Abgabe von Lichtstrahlen von unterschiedlichen Punkten aus entstehen. Es kann eine lichttechnisch hochwertige, homogene Ausleuchtung der bestrahlten Fläche und des auszuleuchtenden Raumbereichs erzielt werden. Gleichzeitig wird eine optisch ansprechende, herkömmlichen Downlights gleichende Erscheinung erzielt, wobei dennoch eine niedrige Bauhöhe eingehalten werden kann, die einen herkömmlichen Decken-, Wand- oder Bodeneinbau der Leuchte erlaubt.

Durch die Facettierung der Mantelfläche und die entsprechende Umlenkung der Strahlen im Linseninneren wird die Beleuchtungsvorrichtung tolerant bzw. unempfindlich gegen Fertigungstoleranzen der Linse und auch Positionstoleranzen betreffend die Relativanordnung der Lichtquelle zur Linse. Fehlpositionierungen der Lichtquelle relativ zur Linse wirken sich auf die Lichtdurchmischung und die homogene Ausleuchtung des bestimmungsgemäß zu beleuchtenden Raumbereichs nicht oder nur kaum aus, da durch die Vielzahl von Facetten ein jeweiliger Strahlengang auch bei Toleranzen sozusagen immer den passend geneigten Mantelflächenabschnitt trifft, an dem er passend umgelenkt wird. Im Zielbereich kann eine lichttechnisch hochwertige, homogene Lichtverteilungscharakteristik erreicht werden.

Um eine besonders effiziente Durchmischung des von der Lichtquelle her eingefangenen Lichts zu erzielen, können die genannten Facetten in Weiterbildung der Erfindung eine gewölbte, von einer Planfläche abweichende Oberfläche besitzen. Die Facettenflächen können hierbei grundsätzlich konvex gewölbt sein, so dass die Mantelfläche noppenartig strukturiert ist. In vorteilhafter Weiterbildung der Erfindung können insbesondere aber auch leicht konkav gewölbte Facettenflächen vorgesehen sein, deren Oberflächenkontur zumindest näherungsweise etwa dem Abdruck flacher Linsen entspricht. Durch solche konkav gewölbten Facetten kann die gewünschte Totalreflexion an der Mantelfläche bei relativ hohem Freiheitsgrad bezüglich der Mantelflächenkonturierung in hohem Maße erhalten werden und gleichzeitig ein besonders starkes Durchmischen des Lichts erzielt werden.

Die Facetten können hierbei auch Mischformen der vorgenannten Wölbungen bzw. Oberflächenkonturen besitzen, beispielsweise dergestalt, dass eine Facette einen konkaven Abschnitt und einen konvex gewölbten Abschnitt umfasst, oder auch einen konkaven Abschnitt und/oder einen konvexen Abschnitt in Kombination mit einem flachen, näherungsweise ebenen Facettenabschnitt. Insbesondere können in Weiterbildung der Erfindung auch Freiformfacetten vorgesehen sein, deren Konturierung keiner mathematischen Grundform entspricht. Hierdurch lassen sich die gewünschten Umlenkwinkel an den Facetten sehr variabel steuern, wodurch eine hohe Durchmischung des Lichts bei gleichzeitig hohem Freiheitsgrad der Mantelflächenkonturierung erreicht wird.

Um den gewünschten Effekt der Vergleichmäßigung in hohem Maße zu erreichen, andererseits jedoch die Totalreflexion an der Mantelfläche zu erhalten, kann in vorteilhafter Weiterbildung der Erfindung nicht nur eine kleinere Anzahl von großflächigen Facetten, sondern eine große Vielzahl kleinflächiger Facetten an der Mantelfläche vorgesehen sein. Je nach Baugröße der Linse kann die Facettenanzahl variieren bzw. auch an den zu erreichenden optischen Effekt angepasst werden. Bei für Downlights üblichen Größen der Linse können in vorteilhafter Weiterbildung der Erfindung mehr als 100, vorzugsweise auch mehr als 200 Facetten über die Mantelfläche verteilt sein, wobei vorteilhafterweise im Wesentlichen die gesamte Mantelfläche - ggf. von Randbereichen abgesehen - mit einer Facettierung versehen ist. Die Verteilung und/oder Formgebung der Facetten kann hierbei grundsätzlich variieren, wobei vorteilhafterweise die Facetten in einem regelmäßigen Muster angeordnet sind, das erfindungsgemäß fünf oder mehr Ringe von Facetten mit jeweils zumindest zwölf Facetten umfassen kann, die übereinander an der Mantelfläche vorgesehen sind. Vorzugsweise sind hierbei in jedem Ring von Facetten ungeachtet der zur Lichtaustrittsseite der Linse hin größer werdenden Durchmesser gleich viele Facetten vorgesehen, so dass ein insgesamt harmonisches, gleichmäßiges Muster erzielt wird, welches eine gleichmäßige Durchmischung erzielt.

Um eine starke Durchmischung der Lichtstrahlen und eine hohe Vergleichmäßigung der Lichtausbreitung zu erreichen, sind in Weiterbildung der Erfindung die Mantelfläche und die darauf vorgesehenen Facetten derart ausgebildet, dass sich die von der Mantelfläche umgelenkten Lichtstrahlen einander noch vor Erreichen der Lichtaustrittsfläche überkreuzen. Dies kann grundsätzlich durch verschiedene Facettenkonturierungen erreicht werden, wobei hier in besonderer Weise leicht gewölbte Facetten geeignet sind.

In vorteilhafter Weiterbildung der Erfindung gibt die Linse unterschiedlich oft umgelenkte Lichtstrahlen ab, und zwar einerseits die an der Mantelfläche durch Totalreflexion umgelenkten Lichtstrahlen und andererseits von der Lichteintrittsfläche der Linse direkt auf die Lichtaustrittsfläche gelenkte Lichtstrahlen. Hierzu kann die vorgenannte napf- bzw. sacklochartige Lichteintrittsausnehmung in Weiterbildung der Erfindung einen zentralen Eintrittsflächenbereich umfassen, der das dort eintretende Licht direkt auf die Lichtaustrittsfläche lenkt, und weiterhin einen an den genannten zentralen Eintrittsflächenbereich vorzugsweise unmittelbar anschließenden äußeren Eintrittsflächenbereich, der die dort eintretenden Lichtstrahlen auf die genannte facettierte Mantelfläche lenkt.

Alternativ oder zusätzlich kann die Linse auch derart beschaffen sein, dass zumindest ein Teil der von der Lichteintrittsfläche der Linse auf die Lichtaustrittsfläche der Linse gelenkten Lichtstrahlen dort, d.h. an der Lichtaustrittsfläche zunächst umgelenkt und auf die vorgenannte Mantelfläche gelenkt wird. Von der genannten totalreflektierenden und/oder verspiegelten Mantelfläche werden die Lichtstrahlen dann zurück auf die Lichtaustrittsfläche der Linse geworfen, um von dort dann auszutreten. Hierbei kann zumindest ein Teil der Lichtaustrittsfläche der Linse bezüglich der von der Lichteintrittsfläche her kommenden Lichtstrahlen totalreflektierend ausgebildet sein, um die Lichtstrahlen durch Totalreflektion auf die Mantelfläche zu lenken. Die von der Mantelfläche zurück auf die Lichtaustrittsfläche gelenkten Lichtstrahlen können von dort nichtsdestotrotz austreten, wenn sie unter einem ausreichend steilen Winkel auf die genannte Lichtaustrittsfläche gelenkt werden. Alternativ oder zusätzlich kann die Lichtaustrittsfläche auch einen verspiegelten Bereich, vorzugsweise einen zentralen verspiegelten Bereich aufweisen, so dass zumindest ein Teil der eintretenden Lichtstrahlen von der Lichteintrittsfläche auf den genannten verspiegelten Bereich gelenkt, dort umgelenkt und auf die Mantelfläche gelenkt wird und von der totalreflektierenden und/oder verspiegelten Mantelfläche auf einen unverspiegelten Bereich der Lichtaustrittsfläche gelenkt wird, um von dort dann aus der Linse auszutreten. Zumindest ein Teil des von der Eintrittsfläche der Linse eingefangenen Lichts wird also mittelbar auf die vorgenannte Mantelfläche der Linse gelenkt, um von dort auf die Lichtaustrittsfläche gelenkt zu werden derart, dass die von der Mantelfläche umgelenkten Lichtstrahlen aus der Linse austreten können. Auch hierdurch können die an der Mantelfläche vorgesehenen Facetten eine besonders effektive Durchmischung des Lichts innerhalb der Linse erreichen.

Vorzugsweise sind die Lichteintrittsflächen und die facettierte Mantelfläche der Linse derart ausgebildet, dass die von der Mantelfläche umgelenkten Lichtstrahlen die von der Lichteintrittsfläche auf die Lichtaustrittsfläche gelenkten Lichtstrahlen noch vor Erreichen der Lichtaustrittsfläche überkreuzen. Hierdurch kann eine weitere Verbesserung der erwünschten Durchmischung und Vergleichmäßigung erreicht werden.

Vorzugsweise lenkt die facettierte Mantelfläche die Lichtstrahlen hierbei auf zumindest 50%, vorzugsweise mehr als 75% der gesamten Lichtaustrittsfläche, d.h. die durch die Mantelfläche umgelenkten Lichtstrahlen werden auf die gesamte Lichtaustrittsfläche oder zumindest einen substantiellen Teil hiervon verteilt. Die direkt auf die Lichtaustrittsfläche gelenkten Lichtstrahlen werden in vorteilhafter Weiterbildung der Erfindung ebenfalls zumindest auf einen zentralen Bereich der Lichtaustrittsfläche verteilt, der vom Durchmesser her zumindest ¾ des Durchmessers der gesamten Lichtaustrittsfläche ausmacht. Je nach gewünschtem Beleuchtungseffekt auf der zu beleuchtenden Fläche können hier aber auch andere Konfigurationen vorgesehen sein.

In Weiterbildung der Erfindung kann die Linse insgesamt betrachtet eine stark flachgedrückte und/oder sich stark erweiternde, insbesondere konische Form besitzen, so dass die an der facettierten Mantelfläche reflektierten Strahlen auf eine relativ große Lichtaustrittsfläche verteilt werden, wobei auch die Mantelfläche eine relativ große Fläche einnimmt und dementsprechend viele Facetten vorgesehen werden können. Beispielsweise kann sich die Mantelfläche der Linse unter einem Kegelwinkel im Bereich von 2 x 40° bis 2 x 80°, vorzugsweise etwa 2 x 50° bis 2 x 70° erweitern, wobei der genannte Kegelwinkel hier aufgrund der Facettierung näherungsweise zu verstehen ist und beispielsweise durch Anlegen einer Tangente an die facettierte Mantelfläche, wenn diese im Schnitt betrachtet wird, gemessen werden kann.

In Weiterbildung der Erfindung kann die Linse mit ihrer facettierten Mantelfläche eine Lichtpunktzerlegungsvorrichtung bilden, die das von der Lichtquelle abgestrahlte Licht in eine Vielzahl von einzelnen Lichtpunkten zerlegt, insbesondere derart, dass jeder Aufpunkt der zu beleuchtenden Fläche bzw. jeder Punkt des auszuleuchtenden Raumbereichs von mindestens 25, vorzugsweise mindestens 50, insbesondere mehr als 100 separat wahrnehmbaren Lichtpunkten her beleuchtet ist. Betrachtet man die Linse von der bestimmungsgemäß zu beleuchtenden Fläche aus bzw. von dem auszuleuchtenden Raumbereich aus, erscheint die Linsenaustrittsfläche nicht als gleichmäßig helle Fläche, sondern es sind auf der Linse die genannte Vielzahl von separat wahrnehmbaren Lichtpunkten erkennbar.

Dabei kann die Linse, insbesondere deren Facettierung derart ausgebildet sein, dass die in Blickrichtung projizierte Größtabmessung D jeder separat wahrnehmbaren Leuchtfläche an der Linse durch folgende Beziehung definiert ist:

$$D \le 2 \cdot a \cdot \tan(x/2),$$

wobei a der Betrachtungsabstand, also der Abstand des beleuchteten Aufpunkts von der jeweiligen Leuchtfläche in Metern gemessen ist und für dem im Aufpunkt durch die Teillichtbündel der Leuchtfläche gebildeten Öffnungswinkel x gilt:

$$x = (-1/g \cdot \ln[(K-B)/(K-1)] - s,$$

wobei der Öffnungswinkel x in Winkelminuten (mit

$$\text{Winkelminute} = \frac{1}{60}° \text{ mit } 360° = \text{Kreis}$$

angegeben ist und für die Parameter g, K, b und s die Ungleichungen

$$0{,}5 \le g \le 0{,}9$$

$$6 \le K \le 9$$

$$1 \le B < 5{,}8$$

$$0 \le s \le 0{,}3$$

gelten und ferner deren Blickrichtung projizierte Mindestabstand benachbarter Leuchtflächen durch die Beziehung definiert ist:

$$b = 2 \cdot a \cdot \tan(y/2),$$

wobei a der Betrachtungsabstand in Metern gemessen ist und $y \ge 10$ Winkelminuten ist, wobei y der durch die benachbarten Teillichtbündel zweier Leuchtflächen gebildete Öffnungswinkel ist.

In vorteilhafter Weiterbildung der Erfindung kann die vorgenannte zentrale Eintrittsfläche der Lichteintrittsausnehmung eine schalenförmige Wölbung besitzen, wobei je nach gewünschter Aufweitung der direkt auf die Lichtaustrittsfläche gelenkten Lichtstrahlen verschiedene Wölbungsgrade vorgesehen sein können. Die genannte Wölbung des zentralen Eintrittsflächenbereichs kann konvex zur LED hin ausgebildet sein, vorzugsweise jedoch kann insbesondere auch eine konkave Wölbung der genannten zentralen Eintrittsfläche vorteilhaft sein. Alternativ oder zusätzlich kann die sich an die zentrale Eintrittsfläche randseitig anschließende äußere Eintrittsfläche in vorteilhafter Weise von der zentralen Eintrittsfläche weg im Durchmesser erweitern, wobei insbesondere eine kegelige Ausbildung der genannten äußeren Eintrittsfläche vorgesehen sein kann.

Die vorgenannte zentrale Lichteintrittsfläche kann in Weiterbildung der Erfindung auch mit einer Facettierung versehen sein, um eine bessere Durchmischung des Lichts zu erzielen, wobei eine solche Facettierung an der genannten zentralen Lichteintrittsfläche alternativ oder zusätzlich zu einer Facettierung an der Mantelfläche vorgesehen sein kann.

Im Gegensatz zu der facettiert ausgebildeten Mantelfläche der Linse ist bei der Erfindung die Lichtaustrittsfläche facettenfrei und glatt ausgebildet. Hierdurch kann einerseits ein klares, herkömmlichen Downlights ähnelndes Erscheinungsbild erreicht werden. Wichtiger jedoch ist die lichttechnische Wirkung einer solchen glatten Lichtaustrittsfläche. In vorteilhafter Weiterbildung der Erfindung kann die glatte Lichtaustrittsfläche der Linse eine leichte, vorzugsweise konvexe Wölbung besitzen und/oder im Zusammenspiel mit der Konturierung der Mantelfläche und der Lichteintrittsfläche der Linse derart ausgebildet sein, dass die von der Mantelfläche auf die Lichtaustrittsfläche umgelenkten Lichtstrahlen nach Austritt aus der Lichtaustrittsfläche einander nochmals überkreuzen und auch die direkt auf die Lichtaustrittsfläche gelenkten Lichtstrahlen nach Austritt aus der Lichtaustrittsfläche überkreuzen. Hierdurch kann eine weitere Durchmischung und Vergleichmäßigung erzielt werden.

Um trotz der für LEDs vorzusehenden Kühlungsmittel einen Einbau in Deckenpaneele oder Decken in herkömmlicher Weise zu gewährleisten, ist die der LED vorgeschaltete Linse in vorteilhafter Weiterbildung der Erfindung relativ flach gestaltet, wobei insbesondere vorgesehen sein kann, dass ein maximaler Linsendurchmesser D vorteilhafterweise an der Lichtaustrittsfläche vorgesehen ist und größer ist als die maximale Linsenhöhe, vorzugsweise zumindest mehr als etwa 125 % der Linsenhöhe beträgt, wobei je nach Beleuchtungsaufgabe auch Linsendurchmesser D von mehr als 200%, ggf. auch mehr als 500% der Linsenhöhe vorgesehen sein können. Um trotz begrenzter Bauhöhe der Linse die gewünschte Lichtdurchmischung und Strahlaufweitung zu erzielen, kann das Durchmesserverhältnis der Linse im Zusammenspiel mit der vorgenannten Facettierung der Mantelfläche entsprechend gewählt werden, wobei hier in vorteilhafter Weiterbildung der Erfindung ein minimaler Linsendurchmesser am Fuß der Linse auf deren Lichteintrittsseite vorgesehen wird und weniger als ⅓ oder auch weniger als ¼, gegebenenfalls auch weniger als 1/5 des maximalen Linsendurchmessers an der Lichtaustrittsseite betragen kann. Je nach Gestaltung können hier verschiedene Durchmesserverhältnisse vorgesehen sein, wobei es sich als günstig erwiesen hat, den minimalen Linsendurchmesser am Fuß der Linse im Bereich von etwa 10 % bis 50 % des maximalen Linsendurchmessers zu wählen.

Auch wenn die auf die Mantelfläche der Linse gelenkten Lichtstrahlen dort durch die Geometrie, d.h. die entsprechend dem Material gewählten flachen Ablenkwinkel, hauptsächlich durch Totalreflexion umgelenkt werden, kann in Weiterbildung der Erfindung vorgesehen sein, die Mantelfläche der Linse reflektierend bzw. verspiegelt zu beschichten. Hierdurch kann eine vollständige Umlenkung auf die Lichtaustrittsfläche der Linse sichergestellt und ein unerwünschter seitlicher Lichtaustritt verhindert werden. Gleichzeitig kann ein größerer Freiheitsgrad bei der Linsengestaltung bzw. der Mantelflächenkonturierung erzielt werden.

Um die Kühlungsproblematik weiter zu lindern, ist in Weiterbildung der Erfindung zwischen der Linsenaußenseite und einem umgebenden Leuchtengehäuse ein Kamin bzw. Luftspalt vorgesehen, der die Zirkulation eines kühlenden Luftstroms an der Linse vorbei zu den hinter der LED liegenden Leuchtenbausteinen ermöglicht. In Weiterbildung der Erfindung sind die genannte Linse und die punktförmige Lichtquelle einschließlich eines versorgenden Trägerbausteins, auf den die Lichtquelle montiert ist, von einem hülsenförmigen Gehäuseteil umgeben, welches vorteilhafterweise stirnseitig in etwa bündig mit der Lichtaustrittsfläche der Linse endet und über die gesamte Linsenhöhe und im Wesentlichen über den gesamten Umfang der Linse von der Linse durch einen Luftspalt beabstandet ist.

Um den genannten hülsenförmigen Gehäuseteil gleichzeitig als Positionier- und Montagehilfe nutzen zu können, kann in Weiterbildung der Erfindung der genannte Hülsenteil an seinem im Bereich der Lichtaustrittsfläche der Linse liegenden Ende einen nach außen vorspringenden Halte- und/oder Montageflansch bzw. -steg aufweisen, mit dem die Leuchte auf den Rand einer Einbauvertiefung beispielsweise in einer Decke oder einem Paneel aufgesetzt werden kann.

Die Erfindung wird nachfolgend anhand bevorzugter Ausführungsbeispiele und zugehöriger Zeichnungen näher erläutert. In den Zeichnungen zeigen:

Fig. 1:    eine Draufsicht auf eine Beleuchtungsvorrichtung in Form eines Deckenstrahlers nach einer vorteilhaften Ausführung der Erfindung, die die Lichtaustrittsfläche der Linse und den hülsenförmigen Gehäuseteil, der durch einen Lichtspalt von der Linse beabstandet ist sowie deren Montageflansch zeigt,

Fig. 2:    eine schematische Schnittansicht der Beleuchtungsvorrichtung aus Fig. 1, die die durch die hülsenförmige Gehäuseausbildung entstehende Konvektion zur Kühlung der Versorgungsbausteine für die LED zeigt, wobei eine Ausführungsvariante mit innen liegender Konvektion gezeigt ist,

Fig. 3:    eine schematische Schnittansicht der Beleuchtungsvorrichtung aus Fig. 1 in einer Darstellung ähnlich Fig. 2, wobei eine Gehäusevariante mit außen liegender Konvektion zur Kühlung der Versorgungsbausteine der LED gezeigt ist,

Fig. 4:    eine perspektivische Ansicht der Linse der Beleuchtungsvorrichtung aus den vorhergehenden Figuren, wobei in den Teilansichten (a) und (b) die Linse schräg von vorne mit der Lichtaustrittsfläche bzw. schräg von hinten mit der Lichteintrittsausnehmung gezeigt ist,

Fig. 5:    eine Seitenansicht der Linse aus Fig. 4, die die Konturierung der Lichtaustrittsfläche sowie der Mantelfläche mit der darauf vorgesehenen Facettierung zeigt,

Fig. 6:    eine Schnittansicht der Linse aus den vorhergehenden Figuren entlang der Linie G-G in Fig. 5, wobei im Detail I der Fig. 6 der Verlauf der Facettierung zu sehen ist,

Fig. 7:    eine Schnittansicht der Linse aus den vorhergehenden Figuren entlang der Linie H-H in Fig. 5, wobei in der Detailansicht J der Fig. 7 der Verlauf der Facettierung zu sehen ist,

Fig. 8:    einen Längsschnitt durch die Linse aus den vorhergehenden Figuren,

Fig. 9:    eine schematische Längsschnittansicht durch die Linse aus den vorhergehenden Figuren, in die der Gang der Lichtstrahlen für eine Punktlichtquelle eingezeichnet ist, um die Überschneidung der primären und sekundären Lichtstrahlen zu verdeutlichen,

Fig. 10:    eine schematische, perspektivische Ansicht einer Linse einer Beleuchtungsvorrichtung nach einer weiteren vorteilhaften Ausführung der Erfindung, wobei die Linse mit einer rechteckigen Außenkontur versehen ist und an ihrer Mantelfläche eine Facettierung besitzt, wobei die Teilansicht (a) die Lichtaustrittsfläche der Linse und die Teilansicht (b) die facettierte Mantelfläche zeigt,

Fig. 11:    eine Seitenansicht der Linse aus Fig. 10,

Fig. 12:    eine Schnittansicht der Linse aus Fig. 10 und Fig. 11 entlang der Linie B-B in Fig. 11,

Fig. 13:    einen Querschnitt durch die Linse aus den vorhergehenden Figuren entlang der Linie A-A in Fig. 11, wobei die Teilansicht (a) den gesamten Schnitt und die Teilansicht (c) in einer vergrößerten Detailansicht den Verlauf der Facetten entlang der Mantelfläche zeigt,

Fig. 14:    eine schematische Schnittansicht der Linse aus den Figuren 10-13 in einer Darstellung ähnlich Fig. 11, in die der Gang der Lichtstrahlen eingezeichnet ist, um die mehrfache Überschneidung der umgelenkten Lichtstrahlen zu verdeutlichen, und

Fig. 15:    eine schematische Seitenansicht der Beleuchtungsvorrichtung aus den vorhergehenden Figuren in verschiedenen Einbausituationen, wobei die Teilansicht (a) eine abgependelte Aufhängung, die Teilansicht (b) einen An- bzw. Aufbau und die Teilansicht (c) einen Deckeneinbau der Leuchte zeigt, und

Fig. 16: eine schematische Darstellung der Lichtpunktzerlegung durch die Linse des Strahlers aus einer der vorhergehenden Figuren.

Das in den Figuren gezeigte Ausführungsbeispiel der Beleuchtungsvorrichtung 1 ist als Downlight bzw. einbaubarer Deckenstrahler ausgebildet, der als Lichtquelle 2 eine LED aufweist, die auf der Leiterplatte 6 eines Versorgungsteils montiert sein kann, welches die Ansteuerung und Stromversorgung der LED sicherstellt, jedoch auch in herkömmlicher Weise über einfache Kabelzuführung versorgt sein kann. Der genannten Lichtquelle 2 vorgeschaltet ist eine grob gesprochen paraboloidstumpfförmige Linse 3, die mit ihrer Lichteintrittsseite unmittelbar an der Leiterplatte 6 sitzend bzw. positioniert angeordnet ist, wobei die Linse 3 hier geringfügig von der Leiterplatte beabstandet sein kann.

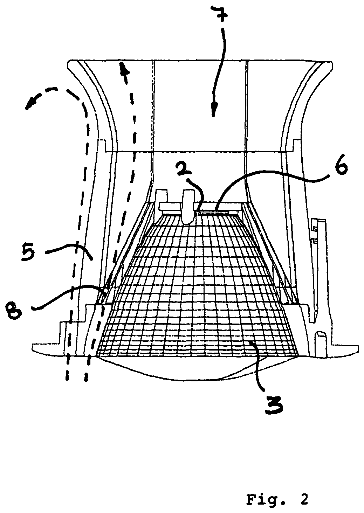

Die Linse 3 sowie die Lichtquelle 2 einschließlich des rückseitig angeordneten Leuchtenteils 7 werden bei der Ausführung nach Fig. 2 von einem hülsenförmigen Gehäuseteil umgeben, welches mit einem vorderen Ende im Bereich der Lichtaustrittsfläche 16 der Linse 3 endet, vgl. Fig. 2 und sich über die gesamte Höhe der Leuchte erstreckt, wobei zwischen der Linse 3 sowie dem Leuchtenteil 7 einerseits und dem hülsenförmigen Gehäuseteil 5 andererseits ein Luftspalt vorgesehen ist, um eine innen liegende Konvektion zu ermöglichen, die die hitzerelevanten Bauteile der Leuchte kühlt.

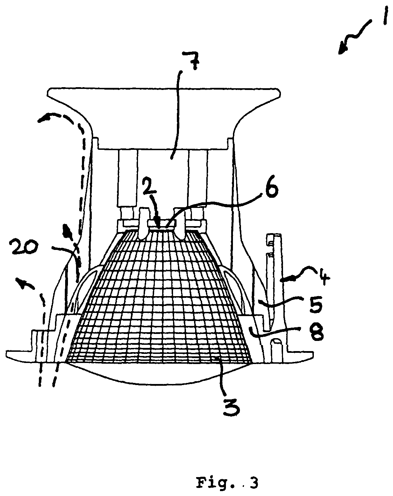

Alternativ zu der in Fig. 2 gezeigten Ausführung kann das hülsenförmige Gehäuseteil 5 auch im Bereich des Übergangs der Linse 3 zum rückwärtig hinter der LED liegenden Leuchtenteil 7 enden bzw. nach innen zum Leuchtenteil 7 gezogen sein und im genannten Bereich Durchtrittsausnehmungen 20 aufweisen, die den durch den Luftspalt 8 zwischen Linse 3 und Gehäuseteil 5 eintretenden Luftstrom aus dem Gehäuseteil 5 austreten lassen und eine außen liegende Konvektion zur Kühlung der Leuchte bewirken, vgl. Fig. 3.

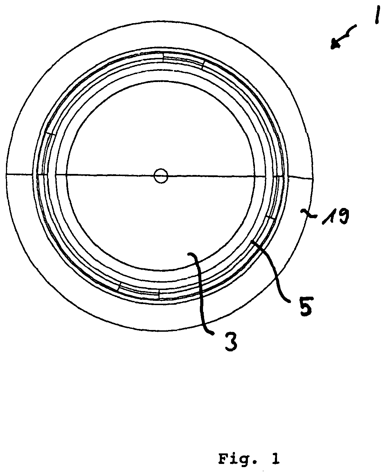

Am stirnseitigen Ende des hülsenförmigen Gehäuseteils 5 im Bereich der Lichtaustrittsseite der Linse 3 ist weiterhin ein radial nach außen vorspringender Montagesteg 19 vorgesehen, der ebenfalls durch einen Spalt vom Hauptkorpus des Gehäuseteils 5 beabstandet ist, vgl. Figuren 1 bis 3, und durch einzelne Stege mit dem Hauptteil des Gehäuseteils 5 verbunden ist. Der genannte Montagesteg 19 kann auf die Aufnahmeausnehmung beispielsweise in einem Deckenpaneel oder dergleichen aufgesetzt werden, wie dies Fig. 1 zeigt.

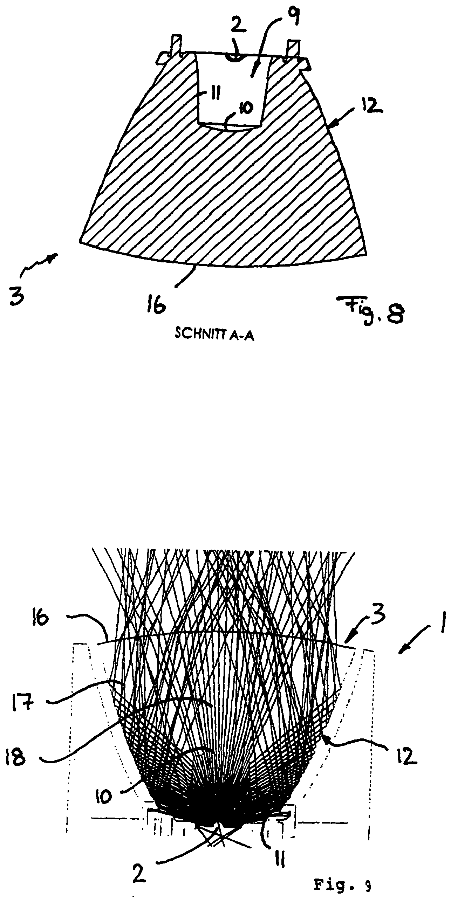

Die über die Lichtquelle 2 gestülpte Linse 3 umfasst auf ihrer Lichteintrittsseite eine sacklochartige Lichteintrittsausnehmung 9, die einen Hohlraum begrenzt, in dem die Lichtquelle 2 angeordnet ist, vgl. Fig. 8. Die genannte Lichteintrittsausnehmung 9 ist hierbei vorteilhafterweise in zwei Flächenbereiche gegliedert, wobei ein zentraler Eintrittsflächenbereich 10 den Boden der sacklochartigen Lichteintrittsausnehmung 9 bildet und in der gezeichneten Ausführungsform leicht konkav gewölbt ausgebildet ist.

Der randseitig an den zentralen Eintrittsflächenbereich 10 angrenzende äußere Eintrittsflächenbereich 11 bildet eine Innenmantelfläche der Lichteintrittsausnehmung 9 und ist in der gezeichneten Ausführung leicht kegelförmig aufgespreizt, so dass sich die Lichteintrittsausnehmung 9 von der Lichtquelle 2 zum zentralen Eintrittsflächenbereich 10 hin verjüngt, vgl. Fig. 8.

Der genannten Lichteintrittsausnehmung 9 gegenüberliegend umfasst der aus einem transparenten Vollmaterial gefertigte Linsenkorpus eine Lichtaustrittsfläche 16, die die gegenüberliegende Stirnseite der Linse 3 bildet und in der gezeichneten Ausführung ballig ausgebildet ist, insbesondere schalenförmig konvex gewölbt ist. Die genannte Lichtaustrittsfläche 16 ist glatt und ohne Facetten oder Oberflächenstrukturierung ausgebildet.

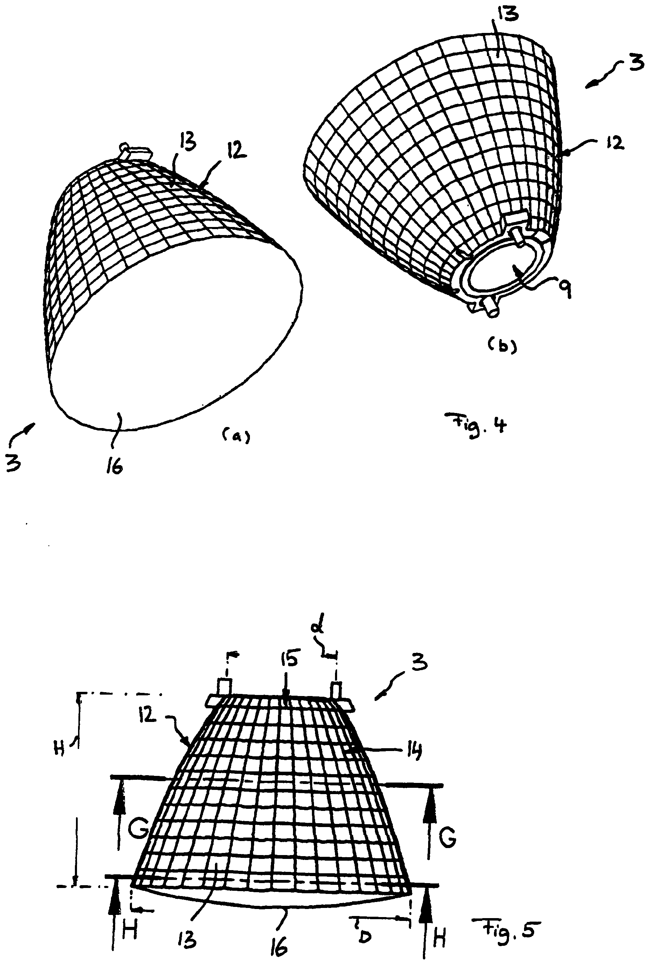

Zwischen der genannten Lichtaustrittsfläche 16 und der Lichteintrittsausnehmung 9 wird die Linse 3 durch eine Mantelfläche 12 umfangsseitig begrenzt, die sich von der Lichteintrittsseite her zur Lichtaustrittsfläche 16 hin im Querschnitt bzw. Durchmesser erweitert und ebenfalls leicht ballig ausgebildet ist, so dass die Mantelfläche 12 im Querschnitt betrachtet leicht parabelförmig geformt ist, vgl. Figuren 5 und 8. In der gezeichneten Ausführung nach Figur 5 ist das Verhältnis des maximalen Durchmessers D an der Lichtaustrittsfläche 16 der Linse 3 zu dem minimalen Durchmesser d der Linse 3 an deren Fuß im Bereich der Lichteintrittsausnehmung 9 etwa 7:3 gewählt, wobei hier jedoch auch andere Durchmesserverhältnisse gewählt werden können, je nachdem, welche Abstrahlverhältnisse der Deckenstrahler erzielen soll. Die Linsenhöhe H beträgt in der gezeichneten Ausführung, vgl. Fig. 8, etwa 5/7 des maximalen Linsendurchmessers D.

Wie die Figuren 5 bis 7 zeigen, ist die genannte Mantelfläche 12 mit einer Oberflächenstrukturierung in Form einer Facettierung versehen, die eine Vielzahl von Facetten 13 aufweist. Die genannten Facetten 13 sind in einem regelmäßigen Muster über die gesamte Mantelfläche 12 verteilt und grenzen im Wesentlichen unmittelbar aneinander an, so dass die gesamte Mantelfläche 12 facettiert ist. Vorteilhafterweise können die Facetten 13 hier in einer Vielzahl von Ringen, die um die Umfangsfläche herum führen, übereinander angeordnet sein, wobei die Facetten wie in Fig. 5 gezeichnet unmittelbar übereinander liegenden angeordnet sein können, jedoch auch in Umfangsrichtung leicht versetzt zueinander. In der in Fig. 5 gezeichneten Ausführung sind zwölf Ringe von Facetten übereinander vorgesehen, wobei in jedem Ring 14 die gleiche Anzahl von Facetten 13 vorgesehen ist, wobei hier in jedem Ring 14 mehr als 24 Facetten, vorzugsweise auch mehr als 36 Facetten vorgesehen sein können.

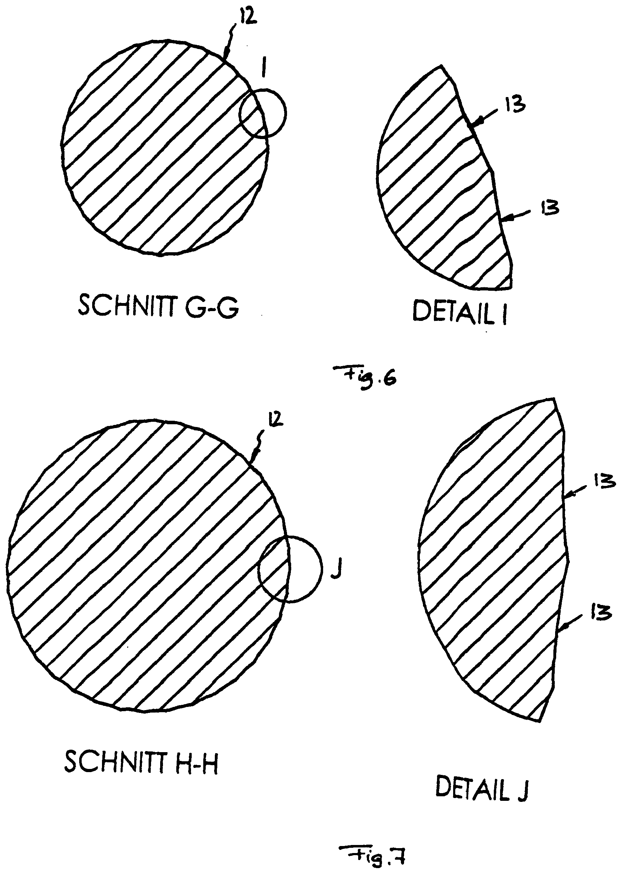

Wie die Figuren 6 und 7 zeigen, sind die Facetten 13 hierbei jeweils leicht konkav gewölbt ausgebildet, so dass die Facetten 13 dem Abdruck von flachen Linsen ähneln.

Die Geometrie der Linse und der Facetten 13 ist hierbei vorteilhafterweise derart gewählt, dass sich die in der Linse 3 laufenden Lichtstrahlen und die aus der Linse 3 austretenden Lichtstrahlen überkreuzen. Wie die Ausführung nach Fig. 9 zeigt, wird das von der punktförmigen Lichtquelle 2, die im Bereich der Lichteintrittsausnehmung 9 positioniert ist, abgegebene Licht vollständig von der Linse 3 eingefangen. Die in Fig. 9 dargestellten Lichtstrahlen gehen von einem mathematischen Punkt, d.h. einer idealisierten, tatsächlich punktförmigen Lichtquelle aus. Die beiden Eintrittsflächenbereiche 10 und 11 der Lichteintrittsausnehmung 9 lenken das eingefangene Licht hierbei unterschiedlich um. Das vom zentralen Eintrittsflächenbereich 10 eingefangene Licht wird direkt auf die Lichtaustrittsfläche 16 gelenkt, wobei dieses direkt abgelenkte Licht auf einen mehr oder weniger großen, zentralen Teilbereich der Lichtaustrittsfläche 16 gelenkt wird, vgl. die direkten Lichtstrahlen 18 in Fig. 9. Der von dem äußeren Eintrittsflächenbereich 11 eingefangene Teil des Lichts der Lichtquelle 2 wird indes auf die Mantelfläche 12 der Linse 3 gelenkt und von der Mantelfläche 12 und den dort vorgesehenen Facetten 13 im Wege der Totalreflexion auf die Lichtaustrittsfläche 16 umgelenkt. Diese sekundären bzw. totalreflektierten Lichtstrahlen 17 werden hierbei im Wesentlichen auf die gesamte Lichtaustrittsfläche 16 verteilt, wobei durch die Facettierung 13 erreicht werden kann, dass die totalreflektierten Lichtstrahlen 17 einander bereits vor Erreichen der Lichtaustrittsfläche 16 überkreuzen und überdies auch die direkten Lichtstrahlen 18 noch vor Erreichen der Lichtaustrittsfläche 16 überkreuzen. Überdies überkreuzen die totalreflektierten Lichtstrahlen 17 auch nach Austritt aus der Lichtaustrittsfläche 16 sowohl einander als auch die ausgetretenen direkten Lichtstrahlen 18. Insgesamt kann hierdurch eine starke, effiziente Lichtdurchmischung erzielt werden, wodurch Lichtunregelmäßigkeiten wie Lichtflecken und Farbflecken auf der bestrahlten fläche vermieden werden.

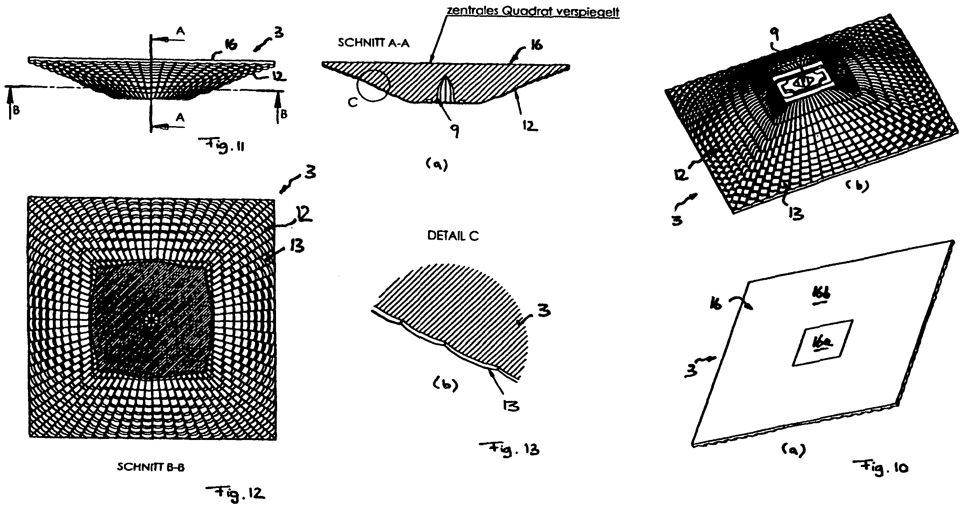

Wie die Figuren 10-14 zeigen, können die von der Lichtquelle 2 in den Linsenkorpus eintretenden Lichtstrahlen auch mittelbar auf die facettierte Mantelfläche 12 gelenkt werden, und zwar insbesondere über die Lichtaustrittsfläche 16 der Linse, um durch eine weitere Umlenkung eine zusätzliche Überkreuzung der Strahlengänge und eine entsprechende Durchmischung des Lichts zu erzielen.

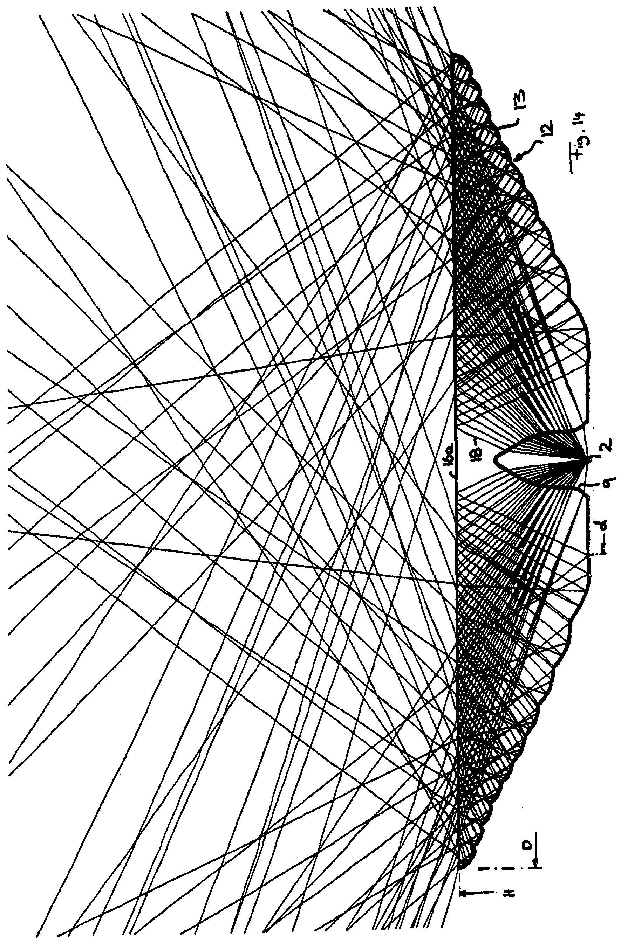

Die in den Figuren 10-14 gezeigte Linse 3 besitzt eine rechteckige Außenkontur bzw. eine im Wesentlichen rechteckig geformte Lichtaustrittsseite, vgl. Fig. 10, wobei in der gezeichneten Ausführung die Lichtaustrittsfläche 16 insgesamt plan- und facettenfrei ausgebildet ist, gegebenenfalls jedoch auch eine schalenförmige Wölbung besitzen könnte. Insgesamt ist die Linse 3 gemäß den Figuren 10-14 sehr viel niedriger ausgebildet bzw. mit einem sehr viel größeren Verhältnis von Durchmesser zu Höhe versehen. Der maximale Linsendurchmesser D im Bereich der Lichtaustrittsfläche 16 ist in der gezeichneten Ausführung mehr als 5 x so groß wie die Höhe H der Linse, vgl. Fig. 14 und auch mehr als doppelt so groß als der minimale Linsendurchmesser d im Bereich der Lichteintrittsseite. Auch hier können jedoch andere Dimensionsverhältnisse gewählt sein, je nach Beleuchtungsaufgabe.

Ähnlich der zuvor beschriebenen Ausführung umfasst die Linse 3 eine zentrale Lichteintrittsausnehmung 9, die einen Hohlraum begrenzt, in dem die Lichtquelle 2 aufgenommen ist. Die genannte Lichteintrittsausnehmung 9 ist insgesamt betrachtet harmonisch gewölbt ausgebildet und näherungsweise - grob gesprochen - kegelig, jedoch vorteilhafterweise an die rechteckige Außenkontur nach Art einer Pyramidenform angepasst, vgl. Fig 10(b). Genauer gesagt ist die genannte Lichteintrittsausnehmung 9 derart konturiert, dass die von der Lichtquelle 2 her eingefangenen Lichtstrahlen zunächst komplett auf die Lichtaustrittsfläche 16 der Linse 3 gelenkt werden. Die genannte Lichtaustrittsfläche 16 ist hierbei in einem zentralen Bereich 16a, vgl. Fig. 10(a) verspiegelt ausgebildet, so dass die dorthin gelenkten Lichtstrahlen zurück reflektiert werden und auf die Mantelfläche 12 gelenkt werden. Um den zentralen, verspiegelten Bereich 16a herum ist die Lichtaustrittsfläche 16 unverspiegelt ausgebildet, jedoch bezüglich der von der Lichteintrittsausnehmung 9 her kommenden Lichtstrahlen totalreflektierend, da diese unter einem entsprechend flachen Winkel auf diesen äußeren Bereich 16b der Lichtaustrittsfläche 16 treffen. Dementsprechend werden die von der Lichteintrittsseite her zunächst auf die Lichtaustrittsfläche 16 gelenkten Lichtstrahlen umgelenkt und auf die Mantelfläche 12 geworfen.

Die genannte Mantelfläche 12 ist verspiegelt ausgebildet und mit einer Facettierung umfassend eine Vielzahl von Facetten 13 versehen, die wiederum in einem regelmäßigen Muster im Wesentlichen über die gesamte Mantelfläche 12 verteilt angeordnet sind, ähnlich wie bei der zuvor beschriebenen Ausführung erläutert. Die genannten Facetten 13 sind in Fig. 13(b) näher zu erkennen, wobei die genannten Facetten insbesondere ballig bzw. konvex gewölbt ausgebildet sein können, vgl. Fig. 13 und Fig. 14.

Die mittelbar, nämlich über die Lichtaustrittsfläche 16 auf die Mantelfläche 12 gelenkten Lichtstrahlen werden von der Mantelfläche 12 aufgrund der dort aufgebrachten verspiegelten Oberflächenbeschichtung, gegebenenfalls auch durch Totalreflexion zurück auf die Lichtaustrittsfläche geworfen, und zwar auf den vorgenannten unverspiegelten Bereich 16b der Lichtaustrittsfläche 16. Vorteilhafterweise ist die Mantelfläche und die dort vorgesehene Facettierung derart ausgebildet, dass die von der Mantelfläche 12 umgelenkten Lichtstrahlen im Wesentlichen vollständig auf den unverspiegelten Bereich der Lichtaustrittsfläche 16 verteilt werden.

Die von der Mantelfläche 12 auf die Lichtaustrittsfläche 16 gelenkten Lichtstrahlen treffen dort unter einem ausreichend steilen Winkel auf die Lichtaustrittsfläche, so dass sie unter entsprechender Umlenkung dort austreten können, vgl. Fig. 14.

Hierdurch überkreuzen sich die Lichtstrahlen innerhalb der Linse 3 mehrfach: Wie Fig. 14 zeigt, werden zunächst die primären Lichtstrahlen 18, die von der Lichteintrittsfläche auf die Lichtaustrittsfläche 16 gelenkt werden, von den dort zurück gelenkten bzw. auf die Mantelfläche 12 gelenkten Lichtstrahlen überkreuzt. Die von der Mantelfläche 12 zurück auf die Lichtaustrittsfläche 16 gelenkten Lichtstrahlen überkreuzen erneut sowohl die vorgenannten primären Lichtstrahlen 18 als auch die von der Lichtaustrittsfläche 16 zurück gelenkten Lichtstrahlen, noch bevor die Lichtstrahlen aus der Lichtaustrittsfläche 16 austreten. Ferner überkreuzen die Lichtstrahlen 16 einander nochmals nach Austritt aus der Lichtaustrittsfläche, vgl. Fig. 14.

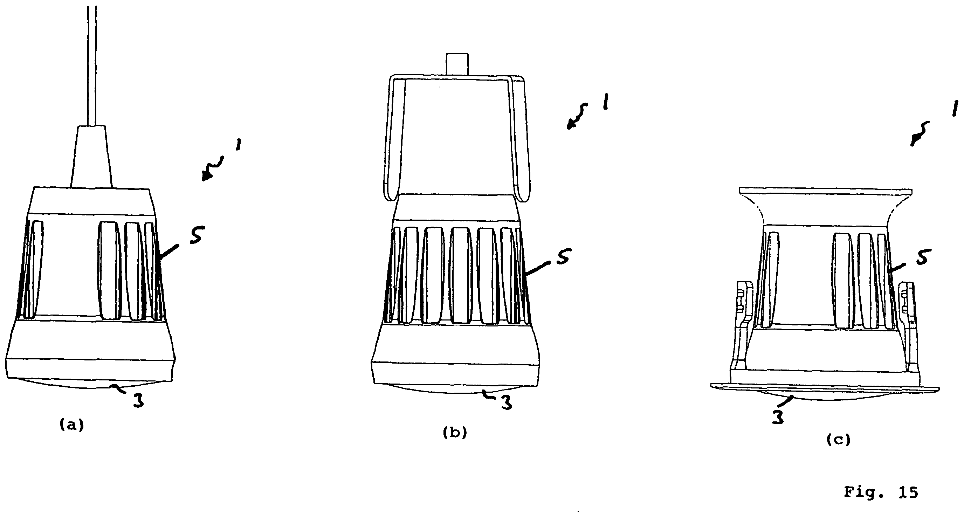

Wie Fig. 15 zeigt, kann die Leuchte in verschiedenen Einbausituationen verwendet werden, wobei vorteilhafterweise das hülsenförmige Gehäuseteil 5 an die verschiedenen Einbausituationen adaptiert werden kann. Der Gehäuseteil 5 umfasst hierzu verschiedene Anschlussflächen für verschiedenartig ausgebildete Halte- bzw. Montagemittel. Gemäß der Teilansicht (a) von Fig. 15 kann die Leuchte abgependelt aufgehängt werden, wobei hier vorteilhafterweise am rückwärtigen Ende an einer dort vorgesehenen Anschlussfläche des Gehäuseteils 5 eine Pendelaufhängung beispielsweise in Form eines zentrisch angelenkten Pendellagers angebracht werden kann. Gemäß Teilansicht (b) der Fig. 15 kann an dem rückwärtigen Ende des hülsenförmigen Gehäuseteils 5 auch ein vorzugsweise knickbarer oder drehbarer Haltebügel befestigt werden, der an einem geeigneten Leuchtenträger wie beispielsweise einer Säule oder dergleichen befestigt werden kann. Wahlweise kann aber auch, wie die Teilansicht (c) von Fig. 15 zeigt, an dem vorderen Endabschnitt des Gehäuseteils 5 ein radial vorspringender Montagesteg befestigt werden, um die Leuchte in einer Deckenausnehmung oder versenkt in einem Deckenpaneel montieren zu können, so dass der genannte Montagesteg bündig am Rand der Montageausnehmung aufsteht.

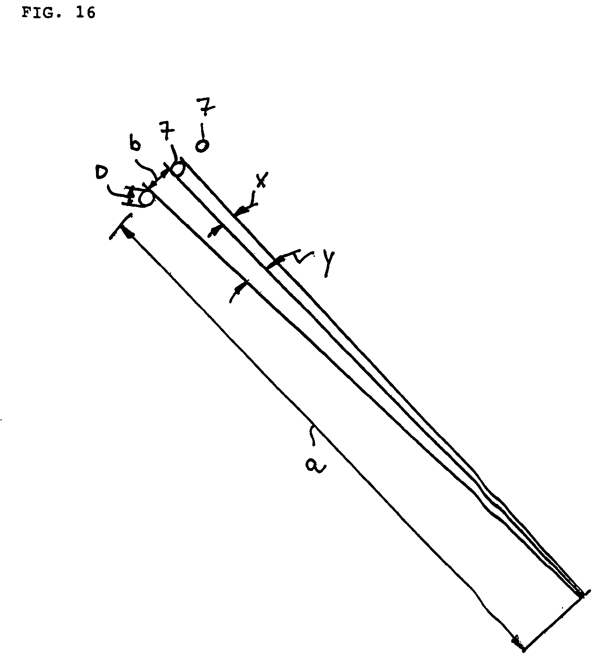

Beispielsweise durch die in den Figuren 10-14 dargestellte, relativ stark flachgedrückte Konturierung der Linse kann in vorteilhafter Weiterbildung der Erfindung eine Lichtpunktzerlegung erreicht werden, die in Fig. 16 veranschaulicht ist. Die Ausbildung der Linse, insbesondere deren Facettierung bewirkt eine Lichtpunktzerlegung, die einerseits eine kontrastreiche Wahrnehmung der auszuleuchtenden Bereiche und andererseits eine weitgehende Blendungsfreiheit ermöglicht. Dabei wird jeder Aufpunkt im ausgeleuchteten Raum von mehreren separat wahrnehmbaren Lichtpunkten beleuchtet. Die Ausbildung der Linse ist dabei derart getroffen, dass sie der in Fig. 16 dargestellten Beziehung genügt, wonach die von der Ausgangsfläche der Freiformlinse gebildeten Lichtpunkte hinsichtlich Größe und Anordnung den Anforderungen an eine sinnvolle Lichtpunktzerlegung genügen. Dies ist dadurch gekennzeichnet, dass die Größtabmessung D jedes Lichtpunkts durch folgende Beziehung definiert ist:

$$D \leq 2 \cdot a \cdot \tan (x/2),$$

wobei a der Betrachtungsabstand, also der Abstand des Aufpunktes von den jeweiligen Leuchtflächen in Metern gemessen ist und für den am Aufpunkt durch die Teillichtbündel der Leuchtfläche gebildeten Öffnungswinkel x gilt:

$$x = (-1/g \cdot \ln [(K-B)/(K-1)] - s$$

wobei der Öffnungswinkel x in Winkelminuten (mit 1 Winkelminute = 1/60 Grad mit 360 Grad = Kreis) angegeben ist und für die Parameter g, K, B und s die Ungleichungen

$$0,5 \leq g \leq 0,9$$

$$6 \leq K \leq 9$$

$$1 \leq B < 5,8$$

$$0 \leq s \leq 0,3$$

gelten und ferner der Mindestabstand benachbarter Leuchtflächen durch die Beziehung definiert ist:

$$b = 2 \cdot a \cdot \tan (y/2),$$

wobei a der Betrachtungsabstand in Metern gemessen ist und $y \geq 10$ Winkelminuten ist, wobei y der durch die benachbarten Teillichtbündel zweier Leuchtflächen gebildete Öffnungswinkel ist.

Dabei sind die zuvorgenannten Parameter B und K ausreichend ungleich voneinander. Vorteilhafterweise wird der parameter B in Abhängigkeit von der im Betrachtungsabstand a festzulegenden, dort die Blendwirkung beeinflussenden Beleuchtungsstärke gewählt, wobei vorzugsweise der Parameter $B \leq 5$, insbesonder $B \leq 4$ ist.

**Patentansprüche**

1. Beleuchtungsvorrichtung, insbesondere Decken-, Wand-, Boden- oder Außenleuchte, mit einer punktförmigen Lichtquelle (2), vorzugsweise in Form einer LED, und einer der Lichtquelle (2) zugeordneten Linse (3), die eine napf- oder sacklochartige Lichteintrittsausnehmung (9) besitzt, die zumindest einen Teil des eintretenden Lichts unmittelbar oder mittelbar auf eine totalreflektierend und/oder verspiegelt ausgebildete Mantelfläche (12) der Linse (3) lenkt, die wiederum das Licht durch Totalreflexion und/oder Reflexion auf eine Lichtaustrittsfläche (16) lenkt, die eine der Lichteintrittsausnehmung (9) gegenüberliegende Stirnseite der Linse (3) bildet, **dadurch gekennzeichnet, dass** die Mantelfläche (12) der Linse (3) mit einer Vielzahl von Facetten (13) versehen ist, die derart geformt sind, dass die von der Mantelfläche (12) umgelenkten Lichtstrahlen einander noch vor Erreichen der Lichtaustrittsfläche (16) überkreuzen, wobei die Facetten (13) in einem regelmäßigen Muster angeordnet sind, das zumindest fünf um die Mantelfläche (12) laufende, auf der Mantelfläche (12) übereinanderliegend angeordnete Ringe (14) mit jeweils mindestens zwölf Facetten aufweist, und die Lichtaustrittsfläche (16) facettenfrei und glatt ausgebildet ist.

2. Beleuchtungsvorrichtung nach dem vorhergehenden Anspruch, wobei die Facetten (13) gewölbte, vorzugsweise leicht konkav gewölbte, Oberflächen besitzen.

3. Beleuchtungsvorrichtung nach einem der vorhergehenden Ansprüche, wobei mehr als 100 Facetten auf der Mantelfläche (12) ausgebildet sind und im Wesentlichen die gesamte Mantelfläche (12) mit Facetten (13) versehen ist.

4. Beleuchtungsvorrichtung nach einem der vorhergehenden Ansprüche, wobei die Mantelfläche sich zur Lichtaustrittsfläche hin unter einer, vorzugsweise etwa kegeligen, Neigung im Bereich von 2 x 40° bis 2 x 80°, insbesondere 2 x 50° bis 2 x 70°, erweitert.

5. Beleuchtungsvorrichtung nach einem der vorhergehenden Ansprüche, wobei die Linse (3) mit den Facetten (13) eine Lichtpunktzerlegungsvorrichtung bildet, die das von der Lichtquelle (2) abgegebene Licht in eine Vielzahl von Lichtpunkte zerlegt, so dass jeder Aufpunkt der zu beleuchtenden Fläche und/oder jeder Punkt des zu beleuchtenden Raumbereichs von zumindest 25, vorzugsweise mindestens 50, insbesondere mehr als 100 separat wahrnehmbaren Lichtpunkten her beleuchtet ist.

6. Beleuchtungsvorrichtung nach dem vorhergehenden Anspruch, wobei die Größtabmessung D eines jeden separat wahrnehmbaren Lichtpunkts der Leuchte folgender Beziehung genügt:

$$D \leq 2 \times a \times \tan(x/2),$$

wobei a der Betrachtungsabstand, also der Abstand des Aufpunktes von den jeweiligen Leuchtflächen in Metern gemessen ist und für den am Aufpunkt durch die Teillichtbündel der Leuchtfläche gebildeten Öffnungswinkel x gilt:

$$x = (-1/g \times \ln[(K-b)/(K-1)] - s$$

wobei der Öffnungswinkel x in Bogenminuten angegeben ist und für die Parameter g, K, B und s die Ungleichungen

$$0{,}5 \leq g \leq 0{,}9$$

$$6 \leq K \leq 9$$

$$1 \leq B \leq 5{,}8$$

$$0 \leq s \leq 0{,}3$$

gelten und ferner der Mindestabstand benachbarter Leuchtflächen durch die Beziehung definiert ist:

$$b = 2 \times a \times \tan(y/2),$$

wobei a der Betrachtungsabstand in Metern gemessen ist und y ≥ 10 Winkelminuten ist, wobei y der durch die benachbarten Teillichtbündel zweier Leuchtflächen gebildete Öffnungswinkel ist.

7. Beleuchtungsvorrichtung nach einem der vorhergehenden Ansprüche, wobei die Lichteintrittsausnehmung (9) einen zentralen Eintrittsflächenbereich (10), der das dort eintretende Licht direkt auf die Lichtaustrittsfläche (16) der Linse (3) lenkt, und einen äußeren Eintrittsflächenbereich (11) umfasst, der das dort eintretende Licht auf die totalreflektierende und/oder verspiegelte Mantelfläche (12) der Linse (3) lenkt, wobei der zentrale Eintrittsflächenbereich (10) der Lichteintrittsausnehmung (9) schalenförmig gewölbt ausgebildet ist und der äußere Eintrittsflächenbereich (11) eine sich zum zentralen Eintrittsflächenbereich (10) hin verjüngende, vorzugsweise etwa kegelige, Innenmantelfläche bildet, und/oder die napf- und/oder sacklochartige Lichteintrittsausnehmung (9) einen Hohlraum begrenzt, in dem die punktförmige Lichtquelle (2) angeordnet ist.

8. Beleuchtungsvorrichtung nach einem der Ansprüche 1-6, wobei die Lichteintrittsausnehmung (9) derart geformt ist, dass zumindest ein Teil des dort eintretenden Lichts direkt auf die Lichtaustrittsfläche (16) der Linse (3) gelenkt wird, wobei die Lichtaustrittsfläche einen verspiegelten Abschnitt (16a) und/oder einen totalreflektierenden Abschnitt (16b) umfasst, von dem oder von denen das von der Lichteintrittsausnehmung (9) her kommende Licht auf dem totalreflektierende und/oder verspiegelte Mantelfläche (12) der Linse (3) gelenkt wird, die das Licht zurück auf einen Bereich der Lichtaustrittsfläche (16) lenkt, von dem die Lichtstrahlen aus der Linse (3) austreten.

9. Beleuchtungsvorrichtung nach einem der vorhergehenden Ansprüche, wobei die Facetten (13) auf der Mantelfläche (12) der Linse (3) derart ausgebildet sind, dass zumindest ein Teil der von der Mantelfläche (12) umgelenkten Lichtstrahlen (17) die Lichtstrahlen (18), die von der Eintrittsfläche (10) direkt auf die Lichtaustrittsfläche (16) gelenkt werden, noch vor Erreichen der Lichtaustrittsfläche (16) überkreuzen, wobei die Lichtaustrittsfläche (16) derart ausgebildet ist, dass die von der Mantelfläche (12) auf die Lichtaustrittsfläche (16) gelenkten Lichtstrahlen (17) die Lichtstrahlen (18), die vom zentralen Eintrittsflächenbereich (10) direkt auf die Lichtaustrittsfläche (16) gelenkt werden und von dort direkt austreten, nach Austritt aus der Lichtaustrittsfläche (16) überkreuzen.

10. Beleuchtungsvorrichtung nach einem der vorhergehenden Ansprüche, wobei die Lichtaustrittsfläche (16) zumindest einen verspiegelten Abschnitt (16a) und zumindest einen unverspiegelten, nicht-reflektierenden Abschnitt (16b) besitzt.

11. Beleuchtungsvorrichtung nach einem der vorhergehenden Ansprüche, wobei die Lichtaustrittsfläche (16) derart ausgebildet ist, dass die von der totalreflektierenden und/oder verspiegelten Mantelfläche (12) auf die Lichtaustrittsfläche (16) gelenkten Lichtstrahlen (17) nach Austritt aus der Lichtaustrittsfläche (16) einander überkreuzen.

12. Beleuchtungsvorrichtung nach einem der vorhergehenden Ansprüche, wobei die Mantelfläche (12) und/oder die darauf vorgesehenen Facetten (13) derart ausgebildet sind, dass die von der totalreflektierenden und/oder verspiegelten Mantelfläche (12) umgelenkten Lichtstrahlen (17) auf zumindest 75% der gesamten Lichtaustrittsfläche (16) verteilt werden.

13. Beleuchtungsvorrichtung nach einem der vorhergehenden Ansprüche, wobei der maximale Linsendurchmesser D an der Lichtaustrittsfläche (16) vorliegt und größer ist als die maximale Linsenhöhe H, vorzugsweise mehr als 125 % der Linsenhöhe H beträgt, und/oder der minimale Linsendurchmesser d am Fuß der Linse (3) auf der Lichteintrittsseite vorliegt und weniger als 66 %, vorzugsweise weniger als 50 %, insbesondere etwa 10 % bis 50 % des maximalen Linsendurchmessers D beträgt.

14. Beleuchtungsvorrichtung nach einem der vorhergehenden Ansprüche, wobei die Linse (3) und die punktförmige Lichtquelle (2) einschließlich eines die Lichtquelle (3) versorgenden Versorgungsbausteins (7), auf den die Lichtquelle (2) montiert ist, von einem hülsenförmigen Gehäuseteil (5) umgeben sind, wobei das hülsenförmige Gehäuseteil (5) stirnseitig in etwa bündig mit der Lichtaustrittsfläche (16) der Linse (3) endet und über die gesamte Linsenhöhe H und im Wesentlichen über den gesamten Umfang der Linse (3) von der Linse (3) durch einen Luftspalt (8) beabstandet ist, wobei das hülsenförmige Gehäuseteil (5) Anschlussflächen zum Anschließen verschiedener Halte- und/oder Montagemittel zum wahlweisen Decken- und/oder Paneeleinbau, zum abgependelten Aufhängen und/oder zum An- oder Aufbau an einem Trägerelement umfasst, wobei vorzugsweise das hülsenförmige Gehäuseteil an seinem stirnseitigen Ende im Bereich der Lichtaustrittsfläche (16) der Linse (3) einen radial nach außen vorspringenden Halte- und/oder Montagesteg (19) aufweist, und/oder an seinem rückseitigen Ende eine Pendelaufhängung aufweist und/oder an seinem rückwärtigen Ende einen vorzugsweise knick- und/oder verdrehbaren Haltebügel besitzt.

15. Beleuchtungsvorrichtung nach einem der vorhergehenden Ansprüche, wobei die Linse (3) derart ausgebildet ist, dass der von der Lichtaustrittsfläche (16) abgestrahlte Lichtkegel einen Abstrahlwinkel von 2 x 5° bis 2 x 80° besitzt.

**Claims**

1. A lighting device, in particular a ceiling, wall, floor or outside light, having a punctiform light source (2), preferably in the form of an LED, und having a lens (3) assigned to the light source (2), said lens having a light entry recess (9) in the form of a bowl or blind hole, which directs at least part of the incident light, directly or indirectly, onto a totally reflecting and/or mirrored lateral area (12) of the lens (3), which in turn directs the light onto a light exit surface (16) by means of total reflection and/or reflection, said light exit surface forming a front side of the lens (3) located opposite the light entry recess (9), **characterized in that** the lateral area (12) of the lens (3) is provided with a plurality of facets (13) shaped such that the light beams deflected by the lateral area (12) cross one another even before reaching the light exit surface (16), wherein the facets (13) are arranged in a regular pattern comprising at least five rings (14) surrounding the lateral area (12) and arranged superimposed on one another on the lateral area (12), each of the rings comprising at least twelve facets, and wherein the light exit surface (16) has a facet-free and smooth design.

2. The lighting device according to the preceding claim 1, wherein the facets (13) have curved, preferably slightly concavely curved, surfaces.

3. The lighting device according to one of the preceding claims, wherein more than 100 facets are formed on the lateral area (12) und essentially the entire lateral area (12) is equipped with facets (13).

4. The lighting device according to one of the preceding claims, wherein the lateral area expands toward the light exit surface under an incline, preferably an almost conical incline, in the range of 2 x 40° to 2 x 80°, in particular 2 x 50° to 2 x 70°.

5. The lighting device according to the preceding claims, wherein the lens (3) with the facets (13) forms a light point splitting device, which splits the light emitted by the light source (2) into a plurality of light spots such that every receiving point of the area to be illuminated and/or every point of the space to be illuminated is lit up by at least 25, preferably at least 50, in particular more than 100 separately discernible light spots.

6. The lighting device according to the preceding claim, wherein the largest dimension D of each separately discernible light spot of the light conforms to the following relation:

$$D \leq 2 \times a \times \tan (x/2),$$

wherein a is the viewing distance, that is, the distance of the receiving point from the respective illuminated panels, measured in meters, and the following applies to the angle of beam spread x created by the partial light bundles of the illuminated panel at the receiving point:

$$x = (-1/g \times \ln [(K-b)/(K-1)] - s$$

wherein the angle of beam spread x is indicated in arc minutes and the following inequalities apply to the parameters g, K, B and s

$$0.5 \leq g \leq 0.9$$

$$6 \leq K \leq 9$$

$$1 \leq B \leq 5.8$$

$$0 \leq s \leq 0.3$$

and, additionally, the minimum distance of adjacent illuminated panels is defined by the relation:

$$b = 2 \times a \times \tan (y/2),$$

wherein a is the viewing distance measured in meters and y is $\geq$ 10 angular minutes, wherein y is the angle of beam spread created by the adjacent partial light bundles of two illuminated panels.

7. The lighting device according the one of the preceding claims, wherein the light entry recess (9) comprises a central entry zone (10), which directly aims the incident light onto the light exit surface (16) of the lens (3), and an external entry zone (11), which directs the incident light onto the totally reflecting and/or mirrored lateral area (12) of the lens (3), wherein the central entry zone (10) of the light entry recess (9) has a bowl-shaped curved design and the external entry zone (11) forms an internal lateral area tapering toward the central entry zone (10) and preferably having an almost conical shape, and/or the bowl and/or blind hole like light entry recess (9) delimits a hollow space with the punctiform light source (2) arranged in it.

8. The lighting device according to one of claims 1 to 6, wherein the light entry recess (9) is shaped such that at least part of the incident light is aimed directly onto the light exit surface (16) of the lens (3), wherein the light exit surface comprises a mirrored section (16a) and/or a totally reflecting section (16b), from which the light coming from the light entry recess (9) is directed onto the totally reflecting and/or mirrored lateral area (12) of the lens (3), which reflects the light back onto an area of the light exit surface (16) from where the light beams emerge from the lens (3).

9. The lighting device according to one of the preceding claims, wherein the facets (13) on the lateral area (12) of the lens (3) are designed such that at least part of the light beams (17) deflected by the lateral area (12) cross the light beams (18) which are aimed from the entry zone (10) directly onto the light exit surface (16) even before reaching the light exit surface (16), wherein the light exit surface (16) is designed such that the light beams (17) directed from the lateral area (12) onto the light exit surface (16) cross the light beams (18) aimed from the central entry zone (10) directly onto the light exit surface (16) und directly emerge from there, after emerging from the light exit surface (16).

10. The lighting device according to one of the preceding claims, wherein the light exit surface (16) has at least one mirrored section (16a) and at least one unmirrored, non-reflecting section (16b).

11. The lighting device according to one of the preceding claims, wherein the light exit surface (16) is designed such that the light beams (17) directed from the totally reflecting and/or mirrored lateral area (12) onto the light exit surface (16) cross one another after emerging from the light exit surface (16).

12. The lighting device according to one of the preceding claims, wherein the lateral area (12) and/or the facets (13) provided thereon are designed such that the light beams (17) deflected by the totally reflecting and/or mirrored lateral area (12) are distributed on at least 75% of the entire light exit surface (16).

13. The lighting device according to one of the preceding claims, wherein the maximum lens diameter D is reached at the light exit surface (16) and is larger than the maximum lens height H, preferably amounts to more than 125% of the lens height H, and/or the minimum lens diameter d is reached at the base of the lens (3) on the light entry side and amounts to less than 66%, preferably less than 50%, in particular about 10% to 50% of the maximum lens diameter D.

14. The lighting device according to one of the preceding claims, wherein the lens (3) and the punctiform light source (2) including a supply component (7) supplying the light source (3) which the light source (2) is mounted on, are surrounded by a barrel-shaped housing part (5), wherein the barrel-shaped housing part (5) ends at the front side nearly flush with the light exit surface (16) of the lens (3) and is spaced from the lens (3) across the entire lens height H and essentially across the entire circumference of the lens (3) by means of a ventilation slot (8), wherein the barrel-shaped housing part (5) comprises connecting faces for connecting different retaining and/or mounting means for the optional ceiling and/or panel installation, for the pendulous suspension and/or for add-on or assembly on a carrier element, wherein the barrel-shaped housing part preferably comprises a radially outward projecting retaining and/or mounting ridge (19) on its frontal end near the light exit surface (16) of the lens (3) and/or comprises a pendulum suspension on its back end and/or has a preferably bendable and/or rotatable retaining clip on its back end.

15. The lighting device according to one of the preceding claims, wherein the lens (3) is designed such that the light cone emitted by the light exit surface (16) has an angle of reflection of 2 x 5° to 2 x 80°.

**Revendications**

1. Dispositif d'éclairage, en particulier lampe plafonnière, murale, de sol ou extérieure, comprenant une source lumineuse (2) ponctuelle, de préférence sous la forme d'une LED, et une lentille (3) associée à la source lumineuse (2), qui possède un évidement d'entrée de lumière (9) similaire à une cuvette ou un trou borgne, qui dirige au moins une partie de la lumière incidente directement ou indirectement sur une surface latérale (12) réalisée totalement réfléchissante et/ou spéculaire de la lentille (3), qui à son tour dirige la lumière par réflexion totale et/ou réflexion sur une surface de sortie de lumière (16), qui forme une face frontale de la lentille (3) opposée à l'évidement d'entrée de lumière (9), **caractérisé en ce que** la surface latérale (12) de la lentille (3) est pourvue d'une pluralité de facettes (13), qui sont formées de telle manière que les rayons lumineux renvoyés par la surface latérale (12) se croisent avant même d'atteindre la surface de sortie de lumière (16), les facettes (13) étant disposées en un motif régulier, qui comporte au moins cinq anneaux (14) s'étendant autour de la surface latérale (12), disposés les uns au-dessus des autres sur la surface latérale (12) et dotés d'au moins respectivement douze facettes, et la surface de sortie de lumière (16) étant réalisée sans facette et lisse.

2. Dispositif d'éclairage selon la revendication précédente, dans lequel les facettes (13) possèdent des surfaces bombées, de préférence bombées de manière légèrement concave.

3. Dispositif d'éclairage selon l'une des revendications précédentes, dans lequel plus de 100 facettes sont formées sur la surface latérale (12) et essentiellement toute la surface latérale (12) est pourvue de facettes (13).

4. Dispositif d'éclairage selon l'une des revendications précédentes, dans lequel la surface latérale s'élargit vers la surface de sortie de lumière en décrivant une inclinaison, de préférence approximativement conique, comprise dans la plage de 2 x 40° à 2 x 80°, en particulier de 2 x 50° à 2 x 70°.

5. Dispositif d'éclairage selon l'une des revendications précédentes, dans lequel la lentille (3) forme avec les facettes (13) un dispositif de dispersion de points lumineux, qui disperse la lumière émise par la source lumineuse (2) en une pluralité de points lumineux, de telle sorte que chaque point de référence de la surface à éclairer et/ou chaque point de la zone d'espace à éclairer est éclairé depuis au moins 25, de préférence au moins 50, en particulier plus de 100 points lumineux perceptibles séparément.

**6.** Dispositif d'éclairage selon la revendication précédente, dans lequel la dimension maximale D de chaque point lumineux perceptible séparément de la lampe satisfait à la relation suivante :

$$D \leq 2 \times a \times \tan (x/2),$$

où a est la distance d'observation, c'est-à-dire la distance entre le point de référence et les surfaces lumineuses respectives mesurée en mètres et pour l'angle d'ouverture x formé sur le point de référence par les faisceaux lumineux partiels de la surface lumineuse, on a :

$$x = (-1/g \times \ln [(K-b)/(K-1)] - s$$

où l'angle d'ouverture x est indiqué en minutes d'arc et pour les paramètres g, K, B et s, les inéquations

$$0,5 \leq g \leq 0,9$$

$$6 \leq K \leq 9$$

$$1 \leq B \leq 5,8$$

$$0 \leq s \leq 0,3$$

s'appliquent et en outre la distance minimale entre des surfaces lumineuses adjacentes est définie par la relation :

$$b = 2 \times a \times \tan (y/2),$$

où a est la distance d'observation mesurée en mètres et y $\geq$ 10 minutes d'arc, où y est l'angle d'ouverture formé par les faisceaux lumineux partiels adjacents de deux surfaces lumineuses.

**7.** Dispositif d'éclairage selon l'une des revendications précédentes, dans lequel l'évidement d'entrée de lumière (9) comprend une zone de surface d'entrée centrale (10), qui dirige la lumière y arrivant directement sur la surface de sortie de lumière (16) de la lentille (3), et une zone de surface d'entrée extérieure (11), qui dirige la lumière y arrivant sur la surface latérale (12) totalement réfléchissante et/ou spéculaire de la lentille (3), la zone de surface d'entrée centrale (10) de l'évidement d'entrée de lumière (9) étant réalisée bombée en forme de cuvette et la zone de surface d'entrée extérieure (11) formant une surface latérale intérieure s'amincissant vers la zone de surface d'entrée centrale (10), de préférence approximativement conique, et/ou l'évidement d'entrée de lumière (9) similaire à une cuvette et/ou un trou borgne limitant une cavité, dans laquelle est disposée la source lumineuse (2) ponctuelle.

**8.** Dispositif d'éclairage selon l'une des revendications 1 à 6, dans lequel l'évidement d'entrée de lumière (9) est formé de telle manière qu'au moins une partie de la lumière y entrant est dirigée directement sur la surface de sortie de lumière (16) de la lentille (3), la surface de sortie de lumière comprenant une portion spéculaire (16a) et/ou une portion totalement réfléchissante (16b), de laquelle ou desquelles la lumière venant de l'évidement d'entrée de lumière (9) est dirigée sur la surface latérale (12) totalement réfléchissante et/ou spéculaire de la lentille (3), qui renvoie la lumière sur une zone de la surface de sortie de lumière (16), de laquelle les rayons lumineux sortent de la lentille (3).

**9.** Dispositif d'éclairage selon l'une des revendications précédentes, dans lequel les facettes (13) sur la surface latérale (12) de la lentille (3) sont réalisées de telle manière qu'au moins une partie des rayons lumineux (17) renvoyés par la surface latérale (12) croisent les rayons lumineux (18), qui sont dirigés directement de la surface d'entrée (10) à la surface de sortie de lumière (16), avant même d'atteindre la surface de sortie de lumière (16), la surface de sortie de lumière (16) étant réalisée de telle manière que les rayons lumineux (17) dirigés par la surface latérale (12) sur la surface de sortie de lumière (16) croisent les rayons lumineux (18), qui sont dirigés directement de la zone de surface d'entrée centrale (10) à la surface de sortie de lumière (16) et en sortent directement, après la sortie hors de la surface de sortie de lumière (16).

**10.** Dispositif d'éclairage selon l'une des revendications précédentes, dans lequel la surface de sortie de lumière (16) possède au moins une portion spéculaire (16a) et au moins une portion non spéculaire, non réfléchissante (16b).

**11.** Dispositif d'éclairage selon l'une des revendications précédentes, dans lequel la surface de sortie de lumière (16) est réalisée de telle manière que les rayons lumineux (17) dirigés par la surface latérale (12) totalement réfléchissante et/ou spéculaire sur la surface de sortie de lumière (16) se croisent après la sortie hors de la surface de sortie de lumière (16).

**12.** Dispositif d'éclairage selon l'une des revendications précédentes, dans lequel la surface latérale (12) et/ou les facettes (13) prévues sur celle-ci sont réalisées de telle manière que les rayons lumineux (17) renvoyés par la surface latérale (12) totalement réfléchissante et/ou spéculaire sont répartis sur au moins 75 % de toute la surface de sortie de lumière (16).

**13.** Dispositif d'éclairage selon l'une des revendications précédentes, dans lequel le diamètre de lentille maximal D se trouve au niveau de la surface de sortie de lumière (16) et est supérieur à la hauteur de lentille H maximale, correspondant de préférence à plus de 125 % de la hauteur de lentille H, et/ou le diamètre de lentille minimal d au pied de la lentille (3) se trouve sur le côté entrée de lumière et correspond à moins de 66 %, de préférence moins de 50 %, en particulier environ 10 % à 50 % du diamètre de lentille maximal D.

**14.** Dispositif d'éclairage selon l'une des revendications précédentes, dans lequel la lentille (3) et la source lumineuse (2) ponctuelle, y compris un composant d'alimentation (7) alimentant la source lumineuse (3), sur lequel est montée la source lumineuse (2), sont entourées par une partie de boîtier (5) en forme de douille, la partie de boîtier (5) en forme de douille se terminant côté frontal approximativement à fleur de la surface de sortie de lumière (16) de la lentille (3) et étant espacée de la lentille (3) par un interstice (8) sur toute la hauteur de lentille H et sensiblement sur toute la circonférence de la lentille (3), la partie de boîtier (5) en forme de douille comprenant des surfaces de raccordement pour le raccordement de différents moyens de retenue et/ou de montage pour le montage au choix dans un plafond et/ou un panneau, pour l'accrochage suspendu et/ou pour le montage sur ou rapporté sur un élément de support, la partie de boîtier en forme de douille comportant de préférence sur son extrémité côté frontal dans la zone de la surface de sortie de lumière (16) de la lentille (3) un rebord de maintien et/ou de montage (19) faisant saillie radialement vers l'extérieur, et/ou comportant sur son extrémité sur la face arrière une suspension pendulaire et/ou possédant à son extrémité arrière un support de fixation pouvant de préférence être plié et/ou tourné.

**15.** Dispositif d'éclairage selon l'une des revendications précédentes, dans lequel la lentille (3) est réalisée de telle manière que le cône lumineux émis par la surface de sortie de lumière (16) possède un angle de rayonnement compris entre 2 x 5° et 2 x 80°.

Fig. 1

Fig. 2

Fig. 3

Fig. 4

(a)

(b)

Fig. 5

12

1

SCHNITT G-G

13

13

DETAIL I

Fig.6

12

J

13

13

SCHNITT H-H

DETAIL J

Fig.7

20

SCHNITT A-A

Fig. 8

Fig. 9

Fig. 10

Fig. 11

Fig. 12

Fig. 13

SCHNITT A-A

zentrales Quadrat verspiegelt

DETAIL C

SCHNITT B-B

Fig. 14

(a)

(b)

(c)

Fig. 15

FIG. 16

**IN DER BESCHREIBUNG AUFGEFÜHRTE DOKUMENTE**

**In der Beschreibung aufgeführte Patentdokumente**

- US 20100226127 A
- EP 2180233 A
- DE 102008036845
- DE 202007007046 U1
- DE 202009005777 U1
- KR 100946548 B1
- EP 2031296 A1